Europäisches Patentamt

European Patent Office

Office européen des brevets

(19)

(11) Publication number: **0 400 342 B1**

(12) **EUROPEAN PATENT SPECIFICATION**

(45) Date of publication of patent specification: **15.03.95**   (51) Int. Cl.6: **G01N 21/35**

(21) Application number: **90108244.6**

(22) Date of filing: **30.04.90**

(54) **Method of infra red analysis.**

(30) Priority: **20.05.89 JP 127597/89**

(43) Date of publication of application:
**05.12.90 Bulletin 90/49**

(45) Publication of the grant of the patent:
**15.03.95 Bulletin 95/11**

(84) Designated Contracting States:
**DE FR GB**

(56) References cited:
**EP-A- 0 192 013**
**EP-A- 0 261 452**
**WO-A-83/04097**
**WO-A-87/04240**
**US-A- 4 673 812**

**MESSEN, PRUEFEN, AUTOMOTISIEREN no. 9, September 1988, pages 430-434, Bad Wörishofen, DE; G. WIEGELB: "Infrarot-Gasanalysator Binos 100 mit integrierter Mikroprozessor-Steuerung"**

(73) Proprietor: **HORIBA, LTD.**
**2 Miyanohigashi-machi**
**Kissyoin**
**Minami-ku**
**Kyoto (JP)**

(72) Inventor: **Asano, Ichiro**
**330-470 Bodaiji,**
**Kousei-cho**
**Kouka-gun,**
**Shiga Prefecture (JP)**
Inventor: **Kojima, Kennosuke**
**46-9 Fujimidai**
**Ohtsu-city,**
**Shiga Prefecture (JP)**
Inventor: **Yoneda, Aritoshi**
**1-24 Hiroshiki,**
**Ohyamazaki-cho**
**Otokuni-gun,**
**Kyoto (JP)**

(74) Representative: **TER MEER - MÜLLER - STEIN-MEISTER & PARTNER**
**Mauerkircherstrasse 45**
**D-81679 München (DE)**

**Description**

BACKGROUND OF THE INVENTION

Field of the Invention

The present invention relates to a method of infrared analysis as claimed in the precharacterizing portion of claim 1.

Description of the Prior Art

It is in general required for an infrared analyzer to conduct a zero calibration and a span calibration periodically. In said analyzer infrared rays from a light source are passed through a cell, into which a sample gas is introduced. A difference between a measuring signal proportional to an energy of an infrared ray having a characteristic absorption wavelength of the specified ingredient gas obtained at that time and a comparative signal proportional to an energy of an infrared ray having a wavelength showing no absorption or a negligible absorption by said specified ingredient gas is amplified to determine a concentration of said specified ingredient gas from a quantity of the infrared ray having said characteristic absorption wavelength absorbed.

In order to conduct the zero calibration and the span calibration in the above described infrared analyzer, the zero gas is introduced into the cell and after stabilisation of the indication a zero-point regulation is carried out. Then the span gas is introduced into the cell and after stabilisation of the indication a span regulation is conducted.

However, since a span gas of high approval accuracy must be used at every span regulation in such a gas calibration method, the calibration costs are expensive.

On the contrary, it is possible to employ the so-called mechanical calibration, in which the intensity of the light passing through the cell is reduced by means of a metallic plate and a filter in order to change a quantity of a light incident upon a detector. In this way the calibration is conducted without using a gas.

However, in this mechanical calibration, in the case where the metallic plate is used to reduce the intensity of the light passing through the cell, if its insert position is dislocated, the sensitivity is subtly influenced and an error may be produced. In addition, in the case where the filter is used to reduce the intensity of the light passing through the cell, the filter itself may for example be stained and damaged which leads to a change in the quantity of the light. As above described, the mechanical calibration exhibits disadvantages in that it is difficult to keep the superior accuracy and troubles are apt to occur due to the existence of movable parts.

In order to solve the disadvantages of the above described gas calibration and mechanical calibration, for example Japanese Patent Application Laid-Open No. Sho 61-20840 has disclosed a method in which when a zero gas is measured, an input signal is changed to the same extent as in the case of an absorption by a gas and further an amplifying factor is changed so that said change may amount to an appointed value to conduct the span calibration.

However, according to this publication, the span regulation must be conducted after the zero-point regulation and thus the zero calibration and the span calibration can not be conducted simultaneously and in a short time.

From US-A-4,673,812 a calibrating mechanism of an infrared analyser is already known. This calibrating mechanism comprises an amplifying circuit for amplifying an output from a measurement wavelength detector, which amplifying circuit consists of a preamplifier and a measurement signal amplifier provided at an output of said preamplifier. The measurement signal amplifier is provided with an input-resistance and a feed-back resistance, a variable resistance connected in series to a normally open switch, the series combination being connected in parallel to the feed-back resistance so that the gain of the measurement signal amplifier may be variable.

SUMMARY OF THE INVENTION

The present invention has been achieved in view of the above described disadvantages and it is an object of the present invention to provide a method of infrared analysis capable of not only conducting the zero calibration and the span calibration in high accuracy without using an expensive gas but also conducting these calibrations simultaneously and in a short time.

In order to achieve the above described object, the method according to claim 1 is used.

With the above described method, since the zero gas measuring signal obtained when the zero gas is measured is memorized and the calculation is conducted on the basis of this memorized zero gas measuring signal, the span calibration does not require the introduction of the expensive span gas into the cell, whereby not only the span calibration can be simply and inexpensively conducted but also the zero calibration and the span calibration can be conducted simultaneously and in a short time.

BRIEF DESCRIPTION OF THE DRAWINGS

Fig. 1 is a block diagram showing an infrared analyzer for conducting the method of the present invention;
Fig. 2 is a diagram showing principal parts of the infrared analyzer for conducting the method of the present invention; and
Fig. 3 is a diagram showing other principal parts of an infrared analyzer for conducting the method of the present invention.

DESCRIPTION OF THE PREFERRED EMBODIMENTS

The preferred embodiments of the present invention are below described with reference to the drawings.

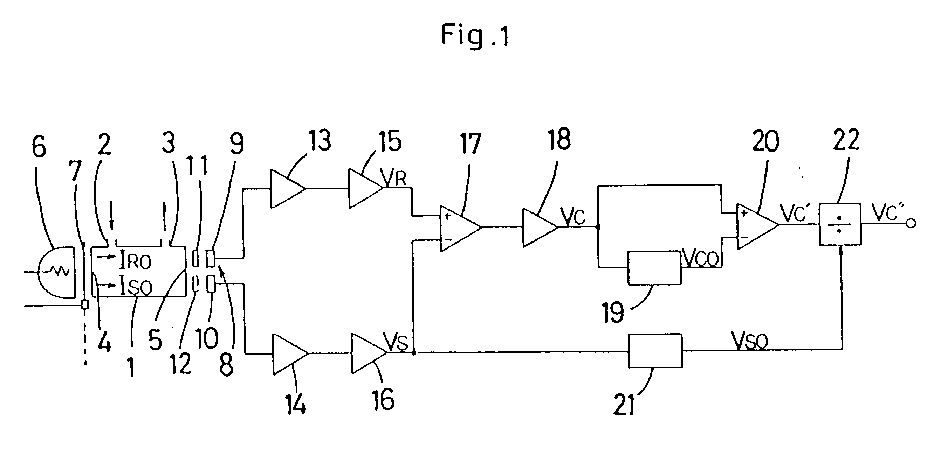

Fig. 1 shows a rough construction of a so-called one light source-one cell type infrared analyzer. Referring to Fig. 1, reference numeral 1 designates a cell provided with an inlet port 2 for a sample gas, an outlet port 3 for the sample gas and cell windows 4, 5 permeable to infrared rays formed at both ends portions thereof. Reference numeral 6 designates a light source provided outside of one cell window 4 of said cell 1 for radiating infrared rays so that the infrared rays radiated from said light source 6 may pass through the cell 1 to be incident upon a detector portion 8 which will be mentioned later. Reference numeral 7 designates a modulation chopper provided between the cell 1 and the light source 6 so as to be driven by a driving mechanism (not shown).

Reference numeral 8 designates a detector portion comprising a comparative wavelength detector 9 and a measuring wavelength detector 10 arranged in parallel to each other and provided outside of the other cell window 5 of the cell 1, said measuring wavelength detector 10 being provided with a band pass filter 12 permeable to infrared rays having a characteristic absorption wavelength absorbed by a specified ingredient gas to be measured in the sample gas to put out a signal proportional to an energy of the infrared rays transmitted. In addition, said comparative wavelength detector 9 is provided with a band pass filter 11 transmitting infrared rays having a wavelength showing no absorption or merely a negligible absorption by said specified ingredient gas to put out a signal proportional to an energy of the infrared rays transmitted. Reference numerals 13, 14 designate preamplifiers provided on the output side of the comparative wavelength detector 9 and the measuring wavelength detector 10, respectively.

Reference numeral 15 designates a comparative signal amplifier provided at the output of the preamplifier 13 for amplifying a measured signal obtained from the comparative wavelength detector 9 through the preamplifier 13 at an appointed gain. Further, a comparative signal $V_R$ which is an output from said comparative signal amplifier 15, being supplied to a ( + ) input terminal of a subtracter 17. Reference numeral 16 designates a measuring signal amplifier provided at the output of the preamplifier 14 for amplifying a measured signal obtained from the measuring wavelength detector 10 through the preamplifier 14 at an appointed gain. Further, a measuring signal $V_S$, which is an output from said measuring signal amplifier 16, being supplied to a (-) input terminal of said subtracter 17. Reference numeral 18 designates an amplifier provided at the output side of the subtracter 17 and $V_C$ designates an output from said amplifier 17.

When measuring the concentration of a sample gas, upon introducing the sample gas into the cell 1 to apply the infrared rays from the light source 6 to said sample gas during modulation by means of the chopper 7, the infrared rays having the characteristic absorption wavelength absorbed by the specified ingredient gas to be measured in the sample gas are incident upon the measuring wavelength detector 10 while the infrared rays having the wavelength showing no absorption or merely a negligible absorption by said specified ingredient gas are incident upon the comparative wavelength detector 9. The respective signals supplied from these detectors 10, 9 are amplified by means of the measuring signal amplifier 16 and the comparative signal amplifier 15, respectively, to obtain the measuring signal $V_S$ and the comparative signal $V_R$. The measuring signal $V_S$ is subtracted from the comparative signal $V_R$ by the subtracter 17 and an output from the subtracter 17 is amplified by the amplifier 18 to obtain the differential signal $V_C$ as concentration signal.

Reference numeral 19 designates a signal memory, such as a hold amplifier, for memorizing a value in the measurement of the zero gas when the zero gas is introduced into the cell 1 to apply the infrared rays to the zero gas. Reference numeral 20 designates a subtracter for producing a difference between said concentration signal $V_C$ and a differential signal $V_{CO}$ memorized in the signal memory 19. Said differential signal $V_{CO}$ is obtained by multiplying a difference between a comparative signal (zero gas comparative signal) $V_{RO}$ and a measuring signal (zero gas measuring signal) $V_{SO}$ in the measurement of the zero gas by a gain $G_C$ of the amplifier 18. Therefore, subtracter 20 supplies a subtraction output $V_C'$ corrected with respect to the drift of the zero point.

Reference numeral 21 designates a signal memory, such as a hold amplifier, for memorizing said zero gas measuring signal $V_{SO}$. Reference numeral 22 designates a divider for dividing said subtraction output $V_C'$ by said zero gas measuring signal $V_{SO}$. The resulting division output $V_C''$ is a signal proportional to merely the absorption of infrared rays by the specified ingredient gas, as below described.

That is to say, since said zero gas measuring signal $V_{SO}$ is the measured signal in the measurement of the zero gas, it is dependent upon the light quantity of the light source 6, the stain of the cell windows 4, 5, the detection sensitivity of the detectors 9, 10, the change in the amplifying factor of the amplifier 16 and the like. On the other hand, the subtraction output $V_C'$, which is an output after the correction of the zero drift, is influenced by the light quantity of the light source 6, the stain of the cell windows 4, 5, the detection sensitivity of the detectors 9, 10, the change in the amplifying factor of the amplifier 16 and the like in addition to the absorption of infrared rays by the specified ingredient gas. Accordingly, the division output $V_C''$ obtained by dividing the subtraction output $V_C'$ by the zero gas measuring signal $V_{SO}$ in said divider 22 becomes a signal proportional to merely the absorption of infrared rays by the specified ingredient gas because the influences by the light quantity of the light source 6, the stain of the cell windows 4, 5, the detection sensivity of the detectors 9, 10, the change in the amplifying factor of the amplifier 16 and the like common to the subtraction output $V_C'$ and the zero gas measuring signal $V_{SO}$ are compensated. In short, a signal, which has been corrected in both zero drift and span drift, can be obtained.

Next, the above described matter, in short the fact that the zero calibration and the span calibration can be conducted by the present invention, is described by the use of mathematical expressions.

Referring to Fig. 1, provided that the energy of the infrared ray having the comparative wavelength radiated from the light source 6 is $I_{RO}$, the energy of the infrared rays having the measuring wavelength radiated from the light source 6 being $I_{SO}$, the transmissivity of the cell 1 being $T_C$, the absorption of infrared rays by the specified ingredient gas in the sample gas (hereinafter referred to as the infrared absorption) being $x$ ($0 \leq x \leq 1$, as for the zero gas, $x = 0$), the energy (intensity) of the infrared rays reaching the comparative wavelength detector 9 being $I_S$, and the energy (intensity) of the infrared rays reaching the measuring wavelength detector 10 being $I_R$, these $I_S$ and $I_R$ are expressed by the following expression (1), (2), respectively.

$$I_R = I_{RO} \cdot T_C \qquad (1)$$

$$I_S = I_{SO} \cdot (1 - x) \cdot T_C \qquad (2)$$

Provided that the sensitivity of the comparative wavelength detector 9 is $\alpha_R$, the total gain from the preamplifier 13 to the amplifier 15 being $G_R$, the sensitivity of the measuring wavelength detector 10 being $\alpha_S$, and the total gain from the preamplifier 14 to the amplifier 16 being $G_S$, the compartive signal $V_R$ and the measured signal $V_S$ are expressed by the following expression (3) and (4), respectively

$$V_R = I_R \cdot \alpha_R \cdot G_R$$
$$= I_{RO} \cdot T_C \cdot \alpha_R \cdot G_R \qquad --- (3)$$
$$V_S = I_S \cdot \alpha_S \cdot G_S$$
$$= I_{SO} \cdot (1 - x) \cdot T_C \cdot \alpha_S \cdot G_S \qquad --- (4)$$

And, provided that the gain of the pmplifier 18 is $G_C$, the concentration signal $V_C$, which is the output of the amplifier 18, is expressed by the following expression (5):

4

$$V_C = G_C \cdot (V_R - V_S)$$

$$= G_C \cdot T_C \cdot \{I_{RO} \cdot \alpha_R \cdot G_R -$$

$$I_{SO} \cdot (1 - x) \cdot \alpha_S \cdot G_S\} \qquad \text{- - - (5)}$$

On the other hand, provided that the zero gas comparative signal is $V_{RO}$ and the zero gas measuring signal is $V_{SO}$ when the zero gas ($x = 0$) showing no absorption at the characteristic absorption wavelength of the specified ingredient gas is intoduced into the cell 1, the following expressions (6), (7) hold:

$$V_{RO} = I_{RO} \cdot T_C \cdot \alpha_R \cdot G_R$$

$$= V_R \qquad \text{- - - (6)}$$

$$V_{SO} = I_{SO} \cdot T_C \cdot \alpha_S \cdot G_S \qquad \text{- - - (7)}$$

In addition, the differential signal $V_{CO}$, which is the output of the amplifier 18 at this time, is expressed by the following expression (8):

$$V_{CO} = G_C \cdot (V_{RO} - V_{SO}) \qquad (8)$$

This differential signal $V_{CO}$ is memorized by the signal memory 19 and supplied to the subtracter 20.

Accordingly, the subtraction output $V_C{}'$ expressed by the following expression (9) is supplied from the subtracter 20. Since $V_C = V_{CO}$ holds good during the measurement of the zero gas, $V_C{}' = 0$ holds good and thus the output, which has been subjected to the zero calibration, is obtained.

$$V_C{}' = V_C - V_{CO} \qquad (9)$$

And, the subtraction output $V_C{}'$ during the measurement of the sample gas is expressed by the following expression (10) from the above described expressions (5), (6), (7), (8), (9).

$$V_C{}' = G_C \cdot T_C \cdot I_{SO} \cdot \alpha_S \cdot x \cdot G_S \qquad (10)$$

As understood from this expression, said subtraction output $V_C{}'$ is proportional to the absorption of infrared rays x, the light quantity of the light source $I_{SO}$, the transmissivity $T_C$ due to the stain of the cell windows 4, 5 and the like.

However, since the signal memory 21 memorizes the zero gas measuring signal $V_{SO}$ during the measurement of the zero gas and supplies it to the divider 22, the division output $V_C{}''$ of the divider 22 is expressed by the following expression (11):

$$V_C{}'' = V_C{}' / V_{SO} \qquad (10)$$

And, the following expression (12) is obtained from this expression (11) and the above described expressions (7), (10).

$$V_C{}'' = (G_C \cdot T_C \cdot I_{SO} \cdot \alpha_S \cdot x \cdot G_S)$$

$$/ (I_{SO} \cdot T_C \cdot \alpha_S \cdot G_C)$$

$$= G_C \cdot x \qquad \text{- - - (12)}$$

Accordingly, an output proportional to the absorption x of the infrared rays can be obtained. In short, a signal, from which all factors, such as the light quantity of the light source (6), the stain of the cell windows 4, 5 and the sensitivity of the detectors 9, 10, influencing upon the detection sensitivity of the infrared analyzer have been eliminated, is obtained. This is the output, which has been subjected to the span calibration.

In addition, the relation between the absorption x of the infrared rays and the concentration of the specified ingredient gas can be easily obtained from the output $V_C'$ when the span gas having the known concentration is measured. Furthermore, it is sufficient that the gain $G_C$ of the amplifier 18 is regulated so that the appointed output may be obtained.

The present invention is not limited by the above described preferred embodiment but various kinds of modification are possible.

For example, the signal treatment in the lower ranges of the detector 9, 10 in Fig. 1 may be conducted by a computer.

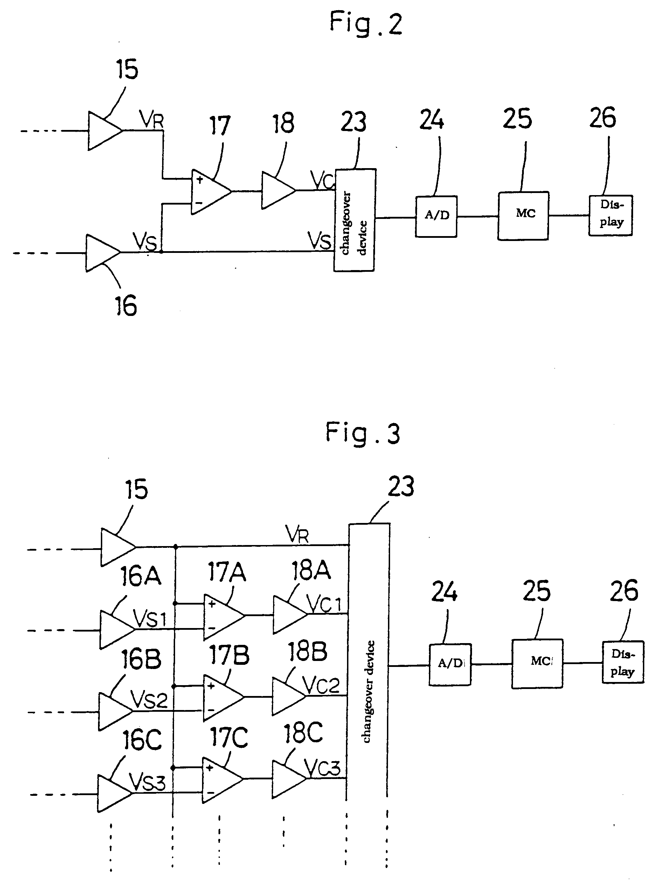

Fig. 2 is a block diagram showing the case where the signal treatment in the lower ranges of the amplifier 18 in Fig. 1 is conducted by a micro computer. Same reference numerals as in Fig. 1 designate the same parts as in Fig. 1 or the parts corresponding to those in Fig. 1.

Referring to Fig. 2, a measuring signal $V_S$, which is an output of the measuring signal amplifier 16, and a concentration signal $V_C$ obtained by amplifying a difference between a comparative signal $V_R$, which is an output of a comparative signal amplifier 15, and the measuring signal $V_S$ in an amplifier 18 are supplied to an A-D converter 24 through an input changeover device 23 to be converted into digital signals. The respective converted signals are taken into a micro computer 25. In addition, the micro computer 25 memorizes a zero gas measuring signal $V_{SO}$ in the measurement of the zero gas and a signal $V_{CO}$ by means of an internal memory to carry out said expressions (9), (11) according to an appointed program, whereby conducting the same treatment as in the infrared analyzer having the construction shown in Fig. 1. In addition, reference numeral 26 designates a display for displaying the calculated result.

Although the so-called one light source-one cell type infrared analyzer is shown in the above described respective preferred embodiments, the present invention is not limited to this type of infrared analyzer. For Example, the present invention can be applied not only to an infrared analyzer, in which a reference cell is disposed in parallel to a sample cell, but also to a multi-component infrared analyzer for analyzing a plurality of components at the same time. In short, the present invention can be applied to every infrared analyzer of the type in which a comparative signal $V_R$ and a measured signal $V_S$ are separately taken out and a difference between said both signals is generated as a concentration signal $V_C$.

Fig. 3 shows a preferred embodiment in which the present invention is applied to a multi-component analyzer. Referring to Fig. 3 reference numerals 16A, 16B, 16C - - - designate measuring signal amplifiers for amplifying outputs of a plurality of measuring wavelength detectors (not shown) corresponding to a plurality of gaseous ingredients to be measured to put out measuring signals $V_{S1}, V_{S2}, V_{S3}$, - - - respectively, reference numerals 17A, 17B, 17C - - - designate subtracters provided so as to correspond to the gaseous ingredients to be measured, respectively, and reference numerals 18A, 18B, 18C - - - designate amplifiers for amplifying differential signals between a comparative signal $V_R$ and the outputs of said measuring signal amplifiers 16A, 16B, 16C - - - to put out concentration signals $V_{C1}, V_{C2}, V_{C3}$ - - -, respectively.

Said concentration signals $V_{C1}, V_{C2}, V_{C3}$ - - - are supplied to a micro computer 25 through an A-D converter 24 and an input changeover device 23. In addition, in this preferred embodiment, the comparative signal $V_R$ is supplied to the micro computer 25 through the A-D converter 24 and the input changeover device 23 in place of the measuring signal $V_S$. This leads to the reduction of the number of input channels of the input changeover device 23.

Measuring signals $V_{S10}, V_{S20}, V_{S30}$ - - - corresponding to the respective gaseous ingredients to be measured can be determined by said expression (8) on the basis of a comparative signal $V_{RO}$ in the measurement of the zero gas and output $V_{C10}, V_{C20}, V_{C30}$ - - - obtained by amplifying differences in the measurement of the zero gas.

That is to say,

$$V_{S10} = V_{RO} - V_{C10}/G_C \qquad \text{- - - (13)}$$

$$V_{S20} = V_{RO} - V_{C20}/G_C \qquad \text{- - - (14)}$$

$$V_{S30} = V_{RO} - V_{C30}/G_C \qquad \text{- - - (15)}$$

.
.

.
.

Accordingly, the same effect as in the above described respective preferred embodiments can be obtained by memorizing $V_{S10}, V_{S20}, V_{S30}$ - - - and $V_{C10}, V_{C20}, V_{C30}$ - - - in a memory within the micro computer 25 and carrying out the calculations by the above described expressions (9), (10) for every gaseous ingredient to be measured.

[Effects of the Invention]

As above described, according to the present invention, the signal in the measurement of the zero gas is memorized and the calculation is carried out on the basis of the memorized signal, so that it is not required to introduce the expensive span gas into the cell when the span calibration is conducted, whereby not only the span calibration can be simply and inexpensively conducted but also the zero calibration and the span calibration can be conducted simultaneously and in a short time.

**Claims**

1. A method of infrared analysis, according to which infrared rays from a light source (6) are running through a cell (1), into which a sample gas has been introduced, and according to which a difference between a measuring signal proportional to an energy of the infrared rays having a characteristic absorption wavelength of a specified ingredient gas obtained at that time and a comparative signal proportional to an energy of the infrared rays wavelengths exhibiting no absorption or merely a negligible absorprion by said specified ingredient gas is amplified to determine a concentration of said specified ingredient gas from a quantity of the infrared rays having said characterictic absorption wavelength absorbed,
in which
   - a gas exhibiting no absorption at said characteristic absorption wavelength is introduced into said cell (1) to obtain a zero gas measuring signal ($V_{SO}$) and a zero gas comparative signal ($V_{RO}$),
   - a first differential signal ($V_{CO}$) is obtained by amplifying a difference between said zero gas comparative signal ($V_{RO}$) and said zero gas measuring signal ($V_{SO}$) characterised in that said first differential signal ($V_{CO}$) is memorized,
   - said first differential signal ($V_{CO}$) is subtracted from a second differential signal obtained by amplifying a difference between said comparative signal ($V_R$) and said measuring signal ($V_S$) obtained in the measurement of the sample gas, and
   - the resulting subtraction output ($V_C'$) is divided by said zero gas measuring signal ($V_{SO}$) to determine a concentration of said specified ingredient gas.

2. The method as claimed in claim 1, **characterized in that** said first differential signal ($V_{CO}$) is stored in a memory (19) provided between an output of a first subtracter (17) for generating said differential signal ($V_{CO}$) and an input of a second subtracter (20) having its further input connected to the output of the first subtracter (17), and in that the output of the second subtracter (20) is supplied to a divider (22) obtaining its divisor input from a further memory (21) storing said zero gas measuring signal ($V_{SO}$).

3. The method as claimed in claim 2, **characterized in that** the functions of the memories (19, 21), the subtracters (17, 20) and the divider (21) are realized by a micro computer.

**Patentansprüche**

1. Infrarotanalyseverfahren, gemäß dem Infrarotstrahlung von einer Lichtquelle (6) durch eine Zelle (1) läuft, in die ein Probengas eingeleitet wurde, und gemäß dem die Differenz zwischen einem dabei erhaltenen Meßsignal, das proportional zur Energie der Infrarotstrahlung mit einer charakteristischen Absorptionswellenlänge eines spezifizierten Bestandteilgases ist,und einem Vergleichssignal, das proportional zur Energie der Infrarotstrahlungswellenlängen ohne Absorption oder lediglich mit vernachlässigbarer Absorption durch das spezifizierte Bestandteilgas ist, verstärkt wird, um die Konzentration des spezifizierten Bestandteilgases aus der Menge an Infrarotstrahlung zu bestimmen, die die charakteristische Absorptionswellenlänge aufweist, bei dem:
   - ein Gas, das bei der charakteristischen Absorptionswellenlänge keine Absorption zeigt, in die Zelle (1) eingeleitet wird, um ein Nullgas-Meßsignal ($V_{SO}$) und ein Nullgas-Vergleichssignal ($V_{RO}$) zu erhalten;

- ein erstes Differenzsignal ($V_{CO}$) durch Verstärken der Differenz zwischen dem Nullgas-Vergleichssignal ($V_{RO}$) und dem Nullgas-Meßsignal ($V_{SO}$) erhalten wird;

**dadurch gekennzeichnet**, daß

- das genannte erste Differenzsignal ($V_{CO}$) abgespeichert wird;
- das genannte erste Differenzsignal ($V_{CO}$) von einem zweiten Differenzsignal abgezogen wird, das durch Verstärken der Differenz zwischen dem Vergleichssignal ($V_R$) und dem bei der Messung des Probengases erhaltenen Meßsignal ($V_S$) erhalten wird; und
- das sich ergebende Subtraktionsausgangssignal ($V_C'$) durch das Nullgas-Meßsignal ($V_{SO}$) geteilt wird, um die Konzentration des spezifizierten Bestandteilgases zu bestimmen.

2. Verfahren nach Anspruch 1, **dadurch gekennzeichnet**, daß das erste Differenzsignal ($V_{CO}$) in einem Speicher (19) abgespeichert wird, der zwischen dem Ausgang eines ersten Subtrahierers (17) zum Erzeugen des Differenzsignals ($V_{CO}$) und dem Eingang eines zweiten Subtrathierers (20) vorhanden ist, dessen weiterer Eingang mit dem Ausgang des ersten Subtrahierers (17) verbunden ist, und daß das Ausgangssignal des zweiten Subtrahierers (20) einem Dividierer (22) zugeführt wird, der ein Teilereingangssignal von einem weiteren Speicher (21) erhält, der das Nullgas-Meßsignal ($V_{SO)}$ abspeichert.

3. Verfahren nach Anspruch 2, **dadurch gekennzeichnet**, daß die Funktionen der Speicher (19, 21), der Subtrahierer (17, 20) und des Dividierers (21) durch einen Mikrocomputer realisiert sind.

**Revendications**

1. Un procédé d'analyse infrarouge, selon lequel des rayons infrarouges en provenance d'une source lumineuse (6) traversent une cellule dans laquelle on a introduit un gaz échantillon, et selon lequel on amplifie la différence entre un signal de mesure proportionnel à l'énergie des rayons infrarouges présentant une longueur d'onde d'absorption caractéristique pour un gaz composant spécifié obtenu à cet instant et un signal comparatif proportionnel à l'énergie des longueurs d'onde des rayons infrarouges ne présentant pas d'absorption ou simplement une absorption négligeable par ledit gaz composant spécifié, afin de déterminer la concentration dudit gaz composant spécifié à partir de la quantité absorbée des rayons infrarouges présentant ladite longueur d'onde d'absorption caractéristique, dans lequel:

- on introduit dans ladite cellule (1), un gaz ne présentant pas d'absorption pour ladite longueur d'onde d'absorption caractéristique afin d'obtenir un signal de mesure de "zéro gaz" ($V_{SO}$) et un signal comparatif "zéro gaz" ($V_{RO}$),
- on obtient un premier signal différentiel ($V_{CO}$) en amplifiant la différence entre ledit signal comparatif "zéro gaz" ($V_{RO}$) et ledit signal de mesure "zéro gaz" ($V_{SO}$), caractérisé en ce que l'on met en mémoire ledit premier signal différentiel ($V_{CO}$),
- l'on soustrait ledit premier signal différentiel ($V_{CO}$) d'un second signal différentiel obtenu en amplifiant la différence entre ledit signal comparatif ($V_R$) et ledit signal de mesure ($V_S$) obtenu au cours de la mesure du gaz échantillon et on divise le signal de sortie de soustraction résultant ($V_{C'}$) par ledit signal de mesure "zéro gaz" ($V_{SO}$) afin de déterminer la concentration dudit gaz composant spécifié.

2. Le procédé selon la revendication 1, caractérisé en ce que l'on met en mémoire ledit premier signal différentiel ($V_{CO}$) dans une mémoire (19) prévue entre une sortie d'un premier organe soustracteur (17) pour engendrer ledit signal différentiel ($V_{CO}$) et une entrée d'un second organe soustracteur (20) dont l'autre entrée est reliée à la sortie du premier organe soustracteur (17), et ce que l'on adresse la sortie du second organe soustracteur (20) à un diviseur (22) obtenant son signal diviseur d'entrée à partir d'une autre mémoire (21) mettant en mémoire ledit signal de mesure "zéro gaz" ($V_{SO}$).

3. Le procédé selon la revendication 2, caractérisé en ce que l'on réalise les fonctions des mémoires (19, 21), les organes soustracteurs (17, 20) et le diviseur (21) à l'aide d'un micro-ordinateur.

Fig.1

## Fig.2

## Fig.3